# EUROPÄISCHE PATENTSCHRIFT

(11) **EP 3 380 262 B1**
(45) Veröffentlichungstag und Bekanntmachung des Hinweises auf die Patenterteilung: **11.12.2019**
(21) Anmeldenummer: 16805274.4
(22) Anmeldetag: 27.10.2016
(51) Int. Cl.: B23B 5/36, F16C 33/46, F16C 33/49

(54) **FERTIGUNGSEINRICHTUNG ZUR FERTIGUNG EINES MASSIVBAUTEILS SOWIE VERFAHREN ZUR FERTIGUNG DES MASSIVBAUTEILS MIT DER FERTIGUNGSEINRICHTUNG**
MANUFACTURING DEVICE FOR MANUFACTURING A SOLID COMPONENT, AND METHOD FOR MANUFACTURING THE SOLID COMPONENT WITH THE MANUFACTURING DEVICE
DISPOSITIF DE FABRICATION POUR LA FABRICATION D'UNE PIÈCE PLEINE ET PROCÉDÉ DE FABRICATION DE LA PIECE PLEINE À L'AIDE DU DISPOSITIF DE FABRICATION

(30) Priorität: 24.11.2015 DE 102015223182
(43) Veröffentlichungstag der Anmeldung: 03.10.2018
(73) Patentinhaber: Schaeffler Technologies AG & Co. KG, 91074 Herzogenaurach (DE)
(72) Erfinder: SANDERS, Bernhard, 90574 Roßtal (DE); NÖTH, Tobias, 96160 Geiselwind (DE)
(86) Internationale Anmeldenummer: PCT/DE2016/200494
(87) Internationale Veröffentlichungsnummer: WO 2017/088866

(56) Entgegenhaltungen:
- DE-A1- 4 212 238
- FR-A- 1 345 014
- JP-A- 2012 223 832

## Beschreibung

Die Erfindung betrifft eine Fertigungseinrichtung zur Fertigung eines Massivbauteils aus einem Bauteilrohling mit den Merkmalen des Oberbegriffs des Anspruchs 1. Die Erfindung betrifft weiterhin ein Verfahren zur Fertigung des Massivbauteils mit der Fertigungseinrichtung.

Als Komponenten in Maschinen, Anlagen, etc. werden oftmals Massivkomponenten eingesetzt, also Bauteile, welche durch trennende Verfahren aus einem massiven Halbzeug gefertigt sind. Ein Beispiel für eine derartige Massivkomponente ist ein massiver Käfig, für den Einsatz in einem Wälzkörperlager. Der massive Käfig hat die Aufgabe, Wälzkörper zu führen und voneinander zu beabstanden. Derartige massive Käfige sind ringförmig ausgebildet und weisen Fenster auf, in denen die Wälzkörper angeordnet sind.

Die Druckschrift DE 42 12 238 A1, die den nächstkommenden Stand der Technik bildet, offenbart ein Verfahren zum Herstellen von Werkstücken mit im wesentlichen kreisförmiger Grundform, die auf einer Umfangsfläche unrund bearbeitet werden, wobei wenigstens ein mit mindestens einer Schneide versehenes Werkzeug um eine Achse rotierend angetrieben wird und die Schneide periodisch mit einer gegen die zu bearbeitende Oberfläche des Werkstücks gerichteten Bewegungskomponente geführt wird. Das Werkstück rotiert mit einer an die periodische Bewegung der Schneide angepassten Drehzahl um die Werkstückachse, wobei die Schneide bezüglich des als feststehend gedachten Werkstücks eine in sich geschlossene Zykloidenbahn beschreibt. Die Überlagerung der Bahn der Schneide mit der Werkstückdrehung im Eingriffsbereich entspricht zumindest einem Teil einer zu erzeugenden Ausnehmung. Die Werkzeugschneide wird im Raum auf einer Kreisbahn geführt, wobei der Eingriff zwischen der Schneide und dem Werkstück zur Erzeugung mindestens einer Ausnehmung in dem der Drehachse des Werkstücks zugewandten oder abgewandten ausgeprägt gekrümmten Bereich der Zykloidenbahn erfolgt.

Die Druckschrift DE 40 34 516 C2 offenbart ein Verfahren und eine entsprechende Vorrichtung, wobei ein Werkstück und eine Schneide eines Werkzeugs derart relativ zueinander bewegt werden, dass die Schneide in einen etwa blütenförmigen Verlauf relativ zu dem Werkstück geführt wird und auf diese Weise Fenster in das Werkstück eingebracht werden, um einen Käfig zu bilden. Bei einer Bearbeitungsvariante wird die Schneide radial außerhalb von dem Werkstück geführt, wobei das Material aus dem Werkstück "ausgelöffelt" wird.

Es ist Aufgabe der Erfindung, eine Fertigungseinrichtung zum Fertigen eines Massivbauteils vorzuschlagen, welches eine hohe Fertigungsgenauigkeit ermöglicht. Diese Aufgabe wird durch eine Fertigungseinrichtung mit den Merkmalen des Anspruchs 1 sowie durch ein Verfahren mit den Merkmalen des Anspruchs 7 gelöst. Bevorzugte oder vorteilhafte Ausführungsformen der Erfindung ergeben sich aus den Unteransprüchen, der nachfolgenden Beschreibung sowie den beigefügten Figuren.

Gegenstand der Erfindung ist eine Fertigungseinrichtung, welche die Fertigung eines Massivbauteils aus einem Bauteilrohling als ein Zwischenprodukt ermöglicht. Bei weiteren Ausgestaltungen der Erfindung ermöglicht die Fertigungseinrichtung die Fertigung des Massivbauteils aus einem Halbzeug, wobei der Bauteilrohling als Zwischenprodukt ebenfalls von der Fertigungseinrichtung gefertigt wird. Das Massivbauteil und/oder das Halbzeug und/oder der Bauteilrohling bestehen vorzugsweise aus Metall Prinzipiell kann es sich bei dem Metall um einen Stahlwerkstoff handeln, es ist jedoch auch möglich, dass das Massivbauteil, das Halbzeug beziehungsweise das Zwischenprodukt aus einem Bundmetall, insbesondere aus einer Kupferlegierung, besteht.

Das Massivbauteil definiert eine Bauteildrehachse, wobei die Bauteildrehachse durch die Rotationsachse des Massivbauteils im Betrieb festgelegt ist. Das Massivbauteil weist eine Mehrzahl von Taschen auf, welche in Umlaufrichtung um die Bauteildrehachse vorzugsweise regelmäßig voneinander beabstandet sind. Zwischen den Taschen sind vorzugsweise Zwischenbereiche, insbesondere Stege, angeordnet. Die Taschen weisen in Umlaufrichtung jeweils eine erste und eine zweite Taschenseite auf. die durch die angrenzenden Zwischenbereichsseiten, insbesondere Stegseiten, gebildet sind. Die Taschen sind als Sacktaschen oder als Durchgangsöffnungen in dem Massivbauteil ausgebildet. Insbesondere ist jede Tasche randseitig durch zwei Zwischenbereiche, insbesondere Stege, begrenzt.

Der Bauteilrohling weist eine Mehrzahl von Rohtaschen auf, welche vorzugsweise durch Rohzwischenbereiche, insbesondere Rohstege, voneinander abgetrennt oder beabstandet sind. Die teilweise oder vollständige Fertigung des Bauteilrohlings aus dem Halbzeug kann optional in einem Vorschritt oder Vorzykloidenbearbeitungsschritt ebenfalls auf der Fertigungseinrichtung erfolgen.

Der Bauteilrohling ist insbesondere als ein Ring oder Zylinder ausgebildet oder weist zumindest einen Ringabschnitt bzw. Zylinderabschnitt auf. Die Rohtaschen bilden Öffnung und/oder Durchgänge in radialer Richtung in dem Ring beziehungsweise Ringabschnitt bilden. Alternativ hierzu sind die Rohtaschen als Rohsacktaschen in dem Zylinderabschnitt ausgebildet. Die Rohzwischenbereiche, insbesondere Rohstege, befinden sich an den Positionen, an denen nach weiteren Fertigungsschritten die Zwischenbereiche, insbesondere Stege, angeordnet sind. Insbesondere entspricht die Anzahl der Rohzwischenberetche, insbesondere Rohstege der späteren Anzahl der Zwischenbereiche, insbesondere Stege,

Die Fertigungseinrichtung weist eine Bauteildreheinrichtung zur Rotation des Massivbauteils um die Bauteildrehachse auf. Die Bauteildreheinrichtung ist insbesondere als eine Drehachse ausgebildet, wobei das Massivbauteil auf der Drehachse aufgespannt ist.

Die Fertigungseinrichtung umfasst einen Meißel, wobei der Meißel eine Werkzeugschneide aufweist. Insbesondere wird unter einem Meißel ein Werkzeug verstanden, welches eine geometrisch bestimmte Schneide als Werkzeugschneide aufweist, die der Trennung des Werkstoffs des Halbzeugs oder des Bauteilrohlings dient

Ferner weist die Fertigungseinrichtung eine Werkzeugdreheinrichtung zur Rotation des Meißels um eine Werkzeugdrehachse auf. Die Werkzeugdreheinrichtung ist insbesondere als eine weitere Drehachse ausgebildet. Die Werkzeugdrehachse ist versetzt zu der Bauteildrehachse angeordnet. Vorzugsweise sind Werkzeugdrehachse und Bauteildrehachse zueinander parallel ausgerichtet. Der Abstand zwischen der Bauteildrehachse und der Werkzeugdrehachse wird als Zustellabstand bezeichnet.

Die Fertigungseinrichtung umfasst auch eine Zustelleinrichtung zur Änderung des Zustellabstands. Insbesondere weist die Fertigungseinrichtung eine Möglichkeit zur Änderung der axialen Lage der Werkzeugschneide und/oder des Bauteilrohlings, Halbzeugs bzw. Massivbauteils auf. Diese Funktion kann in der Bauteildreheinrichtung, der Werkzeugdreheinrichtung, der Zustelleinrichtung oder in einer weiteren Einrichtung umgesetzt sein.

Ferner weist die Fertigungseinrichtung eine Steuereinrichtung, wie zum Beispiel eine digitale Datenverarbeitungseinrichtung, eine CNC-Steuerung oder dergleichen auf, weiche zur Steuerung der Bauteildreheinrichtung, der Werkzeugdreheinrichtung und der Zustelleinrichtung ausgebildet ist. Insbesondere kann die Steuereinrichtung die Fertigungseinrichtung so ansteuern, dass die Werkzeugschneide des Meißels relativ zu dem um die Bauteildrehachse in einer Bauteildrehrichtung rotierenden Bauteilrohling entlang einer Zykloidenbahn zur Bearbeitung der Rohtaschen geführt wird.

Die Steuereinrichtung ist ausgebildet, die Steuerung so umzusetzen, dass in einem Schritt die ersten Taschenseiten mittels der Werkzeugschneide insbesondere trennend und/oder spanend und/oder spanabhebend in den Bauteilrohling eingerbacht werden. Die Ausbildung erfolgt in Endkontur, so dass die gebildeten Taschenseiten ohne weitere Nachbearbeitungsschritte bestimmungsgemäß einsetzbar sind. Die Werkzeugschneide wird in einem ersten Zykloidenbearbeitungsschritt relativ zu dem Bauteilrohling entlang einer ersten Zykloidenbahn geführt. Die Werkzeugschneide wird relativ zu dem Bauteilrohling entlang der ersten Zykloidenbahn geführt, wobei der Bauteilrohling in einer ersten Bauteildrehrichtung um die Bauteildrehachse rotiert.

Es ist vorgesehen, dass die ersten Taschenseiten mittels der Werkzeugschneide geschnitten werden Vorzugsweise liegt ein Spanwinkel der Werkzeugschneide beim Fertigen der ersten Taschenseiten im Bereich von -15° bis 0° oder ist sogar positiv. Insbesondere werden in dem ersten Zykloidenbearbeitungsschritt die ersten Taschenseiten nicht mittels "Schaben" gefertigt. Besonders bevorzugt wird die Werkzeugschneide kontaktfrei zu den zweiten Taschenseiten beziehungsweise den Bereichen der Rohtaschen, welche nachfolgend die zweiten Taschenseiten bilden, geführt.

Die Steuereinrichtung ist ausgebildet, nach dem ersten Zykloidenbearbeitungsschritt die Bauteildrehrichtung und die Werkzeugdrehrichtung umzukehren, so dass der Bauteilrohling in einer Bauteilgegenrichtung und das Werkzeug in einer Werkzeuggegenrichtung rotiert werden.

Die Steuereinrichtung ist vorzugsweise ausgebildet, die Steuerung so umzusetzen, dass in einem weiteren Schritt eine weitere Werkzeugschneide in einem zweiten Zykloidenbearbeitungsschritt relativ zu dem Bauteilrohling entlang einer zweiten Zykloidenbahn zu führen. Die weitere Werkzeugschneide wird in dem zweiten Zykloidenbearbeitungsschritt relativ zu dem um die Bauteildrehachse in der Bauteilgegendrehrichtung rotierenden Bauteilrohling entlang der zweiten Zykloidenbahn zur Bearbeitung der Rohtaschen geführt. Es ist vorgesehen, dass die zweiten Taschenseiten mittels der weiteren Werkzeugschneide geschnitten werden. Vorzugsweise liegt ein Spanwinkel der weiteren Werkzeugschneide beim Fertigen der zweiten Taschenseiten in einem Bereich zwischen -15° und 0° oder ist positiv. Insbesondere werden in dem zweiten Zykloidenbearbeitungsschritt die zweiten Taschenseiten nicht mittels "Schaben" gefertigt. Besonders bevorzugt wird die Werkzeugschneide kontaktfrei zu den ersten Taschenseiten geführt.

Der Spanwinkel wird vorzugsweise durch den Winkel zwischen der Werkstoffebene vor dem Schnitt und der Spanfläche der Werkzeugschneide abzüglich 90° definiert.

Unter einer Zykloidenbahn-auch zyklische Kurve, Radlauf- oder Rollkurve zu nennen - wird vorzugsweise eine Bahn verstanden, die einen Kreispunkt beim Abrollen eines Kreises auf einer Leitkurve beschreibt. Die Leitkurve ist beispielsweise als ein konzentrischer Kreis um die Bauteildrehachse ausgebildet Insbesondere ist die Zykloidenbahn als eine verlängerte Zykloidenbahn ausgebildet, wobei die Werkzeugschneide außerhalb des auf der Leitkurve abrollenden Kreises angeordnet ist Alternativ oder ergänzend weist die Zykloidenbahn als verlǎngerte Zykloidenbahn an den Spitzen Schleifen auf. Die Schleifen bilden die Schneidbahn der Werkzeugschneide in dem Bauteilrohling und definieren somit die geometrische Form der Taschenseiten,

Durch das Fertigen der ersten und optional ergänzend der zweiten Taschenseiten jeweils mittels eines Schneidens und nicht mittels eines Schabens und vorzugsweise mit einem Spanwinkel der Werkzeugschneide, welcher zwischen -15° und 0° liegt oder positiv ausgebildet ist. die Oberflächengüte der Taschenseiten zum einen von der ersten oder zweiten Taschenseite gleich hoch ist und zum zweiten eine ausreichende Güte aufweist, sodass eine Endbearbeitung entfallen kann bzw. die Endbearbeitung durch den ersten und zweiten Zykloidenbearbeitungsschritt gegeben ist. Insbesondere werden die erste und zweite Taschenseite durch den ersten und zweiten Zykloidenbearbeitungsschritt in eine Endform gebracht. Somit ist es möglich, das Massivbauteil kostengünstig über ein Zykloidbearbeitungsverfahren zu fertigen und zugleich eine hohe Oberflächengüte und/oder Formhaltigkeit beziehungsweise eine niedrige Toleranz zu erreichen.

Kurz gesagt teilt sich die Ansteuerung durch die Steuereinrichtung in drei Schritte auf, wobei in einem optionalen Vorschritt die Rohtaschen eingebracht werden in einem ersten Zykloidenbearbeitungsschritt die ersten Taschenseiten geschnitten werden und in einem zweiten Zykloidenbearbeitungsschritt die zweiten Taschenseiten geschnitten werden. Dabei kann es vorgesehen sein dass die Rohtaschen mittels Schruppen, die ersten und zweiten Taschenseiten dagegen mittels Schlichten eingebracht werden.

Im Rahmen der Erfindung wird vorgeschlagen, dass der Meißel beziehungsweise dessen Werkzeugschneide insbesondere geometrisch und/oder in einer Querschnittebene und/oder in einer Radialebene zu der Werkzeugdrehachse so ausgebildet ist, dass ein Radialvektor zu der Werkzeugdrehachse, welcher durch die Schneidkante der Werkzeugschneide des Meißels verläuft, die Werkzeugschneide in einen Freiwinkelabschnitt und in einen Spanwinkelabschnitt teilt, wobei der Freiwinkelabschnitt mindestens doppelt so groß wie der Spanwinkelabschnitt ausgebildet ist.

Gedanklich kann somit die Werkzeugschneide, insbesondere in einer axialen Draufsicht in Richtung der Werkzeugdrehachse in zwei Winkelbereiche, nämlich den Freiwinkelabschnitt und den Spanwinkelabschnitt, unterteilt werden. Diese beiden Abschnitte werden durch den Radialvektor voneinander getrennt. Dadurch, dass der Freiwinkelabschnitt deutlich größer gewählt ist im Vergleich zu dem Spanwinkelabschnitt wird erreicht, dass das Massivbauteil in Endform durch die Bearbeitung mit dem Meißel gebracht werden kann. Insbesondere sind keine Glättungsfertigungsschritte und dergleichen mehr notwendig.

Bei einer bevorzugten Realisierung der Erfindung hat sich für die Werkzeugschneide des Meißels ein Keilwinkel zwischen 53 Grad und 63 Grad besonders vorteilhaft herausgestellt. Bei einer bevorzugten Ausgestaltung der Erfindung beträgt der Keilwinkel 58 Grad.

Alternativ oder ergänzend ist es bevorzugt, dass der Freiwinkelabschnitt größer als 45 Grad ausgebildet ist. Durch eine beliebige Auswahl der genannten Bedingungen ist die Werkzeugschneide in dem geometrischen Aufbau festgelegt.

Bei einer bevorzugten Weiterbildung der Erfindung weist die Fertigungseinrichtung einen weiteren Meißel auf, wobei der Meißel und der weitere Meißel auf der Werkzeugdreheinrichtung gegensinnig zueinander angeordnet sind. Es ist besonders bevorzugt, dass der Meißel und der weitere Meißel baugleich zumindest in Bezug auf die Werkzeugschneide ausgebildet sind, jedoch gegensinnig zueinander auf der Werkzeugdrehachse aufgereiht sind. Es ist vorgesehen, dass der Meißel eine der Taschenseiten und der weitere Meißel die andere Taschenseite bearbeitet. Auf diese Weise kann erreicht werden, dass jede der Taschenseiten in Endform bearbeitet werden kann.

Bei einer bevorzugten Weiterbildung der Erfindung umfasst die Fertigungseinrichtung einen Vorbearbeitungsmeißel, welcher die Bearbeitung zum Einbringen der Rohtaschen in den Bauteilrohling übernimmt. Geometrisch betrachtet verläuft ein weiterer Radialwinkel zu der Werkzeugdrehachse, welcher durch die Schneidkante der Werkzeugschneide des Vorbearbeitungsmeißels verläuft, außerhalb eines Keilwinkelbereichs der Werkzeugschneide des Vorbearbeitungsmeißels. Durch diese geometrische Ausgestaltung wird erreicht, dass der Vorbearbeitungsmeißel beide Seiten der Rohtaschen in das Halbzeug beziehungsweise den Bauteilrohling einbringen kann. Dabei ist die Qualität der Oberfläche der eingebrachten Rohtaschen nicht entscheidend, da diese ohnehin durch den Meißel und den weiteren Meißel noch weiter bearbeitet werden.

Bei einer bevorzugten Realisierung der Erfindung ist ein Keilwinkel der Werkzeugschneide des Vorbearbeitungsmeißels zwischen 45 Grad und 55 Grad. Besonders vorteilhaft hat sich ein Keilwinkel von 50 Grad gezeigt.

Ein weiterer Gegenstand der Erfindung betrifft ein Verfahren zum Fertigen des Massivbauteils, wobei das Verfahren durch eine Fertigungseinrichtung umgesetzt wird, wie sie zuvor beschrieben wurde beziehungsweise nach einem der vorhergehenden Ansprüche.

Besonders bevorzugt ist vorgesehen, dass in dem ersten Zykloidenbearbeitungsschritt der Bauteilrohling in einer Bauteildrehrichtung und die Werkzeugschneide in einer Werkzeugdrehrichtung rotiert werden. In dem zweiten Zykloidenbearbeitungsschritt werden dagegen der Bauteilrohling in einer Bauteilgegendrehrichtung und die Werkzeugschneide in einer Werkzeuggegendrehrichtung, also jeweils in der Gegenrichtung, rotiert. Alternativ oder ergänzend ist es vorteilhaft, dass die erste Zykloidenbahn gegenläufig zu der zweiten Zykloidenbahn ausgebildet ist. Auf diese Weise können gleiche oder zumindest ähnliche Schneidbedingungen für die erste und die zweite Taschenseite erreicht werden.

Vorzugsweise sind die erste Zykloidenbahn und die zweite Zykloidenbahn phasenversetzt zueinander angeordnet, jedoch in der Form und/oder in dem Verlauf besonders bevorzugt identisch ausgebildet. Durch den Phasenversatz, insbesondere um einen Offset-Winkel um die Bauteildrehachse, wird erreicht, dass in dem ersten Zykloidenbearbeitungsschritt nur die erste Taschenseite gefertigt, insbesondere geschnitten wird und die zweite Taschenseite kontaktfrei bleibt und in dem zweiten Zykloidenbearbeitungsschritt nur die zweite Taschenseite gefertigt, insbesondere geschnitten wird und die erste Taschenseite kontaktfrei bleibt.

Es kann vorgesehen sein, dass die Taschenseiten mit einer Bearbeitung radial von außen oder radial von innen in den Bauteilrohling eingebracht werden. In dem ersten Fall arbeitet die Werkzeugschneide von außen nach innen bezogen auf die Bauteildrehachse, bei dem zweiten Fall arbeitet die Werkzeugschneide von innen nach außen, ebenfalls bezogen auf die Bauteildrehachse. Vorzugsweise werden die Drehrichtungen des Bauteilrohlings und der Werkzeugschneide wie folgt gewählt: Die Werkzeugschneide und der Bauteilrohling rotieren entgegengesetzt oder gegensinnig, sofern die Werkzeugschneide an einem Außenumfang des Bauteilrohlings beginnend schneidet. Die Werkzeugschneide und der Bauteilrohling rotieren in gleicher Richtung oder gleichsinnig, sofern der Bauteilrohling ringförmig ausgebildet ist und die Werkzeugschneide an einem innenumfang des Bauteilrohlings beginnend schneidet.

Bei einer bevorzugten Realisierung der Erfindung weist die Werkzeugschneide und die weitere Werkzeugschneide einen Anstellwinkel relativ zu einem Radialvektor zu der Käfigdrehachse als Bauteildrehachse auf. Es ist bevorzugt, dass der Anstellwinkel in dem ersten und in dem zweiten Zykloidenbearbeitungsschritt unterschiedlich ausgebildet ist. Durch den unterschiedlichen Anstellwinkel wird erreicht, dass die jeweilige Werkzeugschneide in beiden Zykloidenbearbeitungsschritten schneidend beziehungsweise mit dem genannten Spanwinkel geführt werden kann. Besonders bevorzugt sind die Anstellwinkel in Bezug auf den Radialvektor gleich groß, jedoch sind die Werkzeugschneiden spiegelsymmetrisch zu dem Radialvektor angeordnet. Die Änderung des Anstellwinkels von dem ersten zu dem zweiten Zykloidenbearbeitungsschritt kann auf verschiedene Weise erfolgen:
Zum einen ist es möglich: dass die Werkzeugschneide bei dem Übergang von dem ersten Zykloidenbearbeitungsschritt zu dem zweiten Zykloidenbearbeitungsschritt um 180 Grad um den Radialvektor der Werkzeugdrehachse verschwenkt wird, um die weitere Werkzeugschneide zu bilden. Alternativ ist es möglich, dass zwei unterschiedliche Werkzeugschneiden verwendet werden, welche beispielsweise axial versetzt entlang der Werkzeugdrehachse angeordnet sind. Es ist auch möglich ein Werkzeugwechselsystem einzusetzen, welches die Werkzeugschneiden zwischen den Zykloidenbearbeitungsschritten wechselt.

Bei einer bevorzugten Weiterbildung der Erfindung wird der Zustellabstand in Abhängigkeit einer axialen Position der Werkzeugschneide relativ zu dem Käfigrohling verändert. Durch die Änderung des Zustellabstands wird erreicht, dass die erste und/oder die zweite Taschenseite nicht nur parallel zu der Bauteildrehachse geführt ist bzw, sind, sondern auch eine andere geometrische Form annehmen kann. Besonders bevorzugt wird der Zustellabstand in Abhängigkeit der axialen Position der Werkzeugschneide relativ zu dem Bauteilrohling derart verändert, dass die Taschen trapezförmig ausgebildet sind. Insbesondere sind die Taschen in einer radialen Draufsicht trapezförmig ausgebildet. Der Übergang von rechteckigen Taschen zu trapezförmigen Taschen kann somit in einfacher Weise durch eine Programmierung einer entsprechenden Fertigungseinrichtung erfolgen und verursacht keine weitergehenden Kosten in der Herstellung des Massivbauteils. Alternativ oder ergänzend können auch die Neigung und/oder der Neigungsverlauf der Taschenseiten in radialer Richtung zu der Bauteildrehachse bei der ersten und der zweiten Taschenseite unterschiedlich ausgebildet sein. Betrachtet man eine Stirnseite der Tasche, also insbesondere einen Bodenbereich oder einen Deckenbereich in axialer Richtung, so können die Begrenzungen der Stirnseiten in Umlaufrichtung asymmetrisch zueinander ausgebildet sein. Insbesondere können die Übergänge zu den Taschenseiten trapezfömig und/oder unabhängig zueinander ausgebildet sein. Insbesondere weist jede der Taschen zwei Stirnseiten und zwei Taschenseiten auf, wobei mindestens eine der Stirnseiten in Richtung der Bauteildrehachse gesehen annähernd trapezförmig, insbesondere trapezförmig und/oder die Taschenseiten in radialer Draufsicht betrachtet annähernd trapezförmig, insbesondere trapezförmig, ausgebildet sind.

Bei einer bevorzugten Ausgestaltung der Erfindung werden die Rohtaschen in den Bauteilrohling durch einen Vorzykloidenbearbeitungsschritt als ein Rohbearbeitungsschritt eingebracht. Auch in dem Vorzykloidenbearbeitungsschritt wird eine Werkzeugschneide relativ zu dem Bauteilrohling entlang einer Zykloidenbahn, in diesem Fall einer Vorzykloidenbahn geführt. Bei dem Vorzykloidenbearbeitungsschritt ist jedoch vorgesehen, dass beide Taschenseiten der Rohstege im gleichen Vorzykloidenbearbeitungsschritt gefertigt werden. Dies hat den Hintergrund, dass die Taschenseiten durch die nachfolgenden Zykloidenbearbeitungsschritte ohnehin in die Endform gebracht werden, sodass keine besonders hohe Oberflächengüte oder Fertigungsgenauigkeit während des Vorzykloidenbearbeitungsschritts erforderlich ist. Es ist bevorzugt vorgesehen, dass gegenüber der Vorzykloidenbahn die erste Zykloidenbahn in eine erste Umlaufrichtung phasenversetzt und die zweite Zykloidenbahn in eine Gegenrichtung hierzu phasenversetzt angeordnet ist

Bei einer bevorzugten Realisierung der Erfindung ist das Massivbauteil als ein Massivkäfig für ein Wälzlager ausgebildet Das Wälzlager ist vorzugsweise als ein Rollenlager und bei besonders bevorzugten Ausgestaltungen der Erfindung als ein Kegelrollenlager ausgebildet. Der Massivkäfig definiert eine Käfigdrehachse als die Bauteildrehachse, Der Massivkäfig weist eine Mehrzahl von Stegen als die Zwischenbereiche auf, wobei zwischen den Stegen die Taschen angeordnet, wobei die Taschen als Aufnahmen von Wälzkörpern des Wälzlagers ausgebildet sind.

Der Massivkäfig kann genau eine umlaufende Reihe von Stegen aufweisen oder auch zwei- oder mehrreihig ausgebildet sein. Optional kann der Massivkäfig Seitenringe oder Zwischenringe aufweisen, wobei die Stege die Seitenringe und/oder Zwischenringe in axialer Richtung verbinden Seitenringe beziehungsweise Zwischenringe und Stege sind zusammen einstückig ausgebildet.

Prinzipiell ist es möglich, dass die Taschen des Massivbauteils in einer radialen Draufsicht einen rechteckigen Querschnitt aufweisen und/oder insbesondere in der Ausgestaltung als Massivkäfig zur Aufnahme von Zylinderrollen ausgebildet sind. Es ist jedoch besonders bevorzugt, dass die Taschen trapezförmig ausgebildet sind und/oder zur Aufnahme von Kegelrollen ausgebildet sind.

Die Stege weisen jeweils eine erste und eine zweite Stegseite auf, welche zugleich die Taschenseiten bilden, wobei die Stegseiten zur Anlage der Wälzkörper in Umlaufrichtung um die Käfigdrehachse ausgebildet sind. Insbesondere weisen die Stegseiten Anlageflächen für die Wälzkörper auf Es weisen alle ersten Stegseiten in eine erste Umlaufrichtung und alle zweiten Stegseiten in eine zweite Umlaufrichtung, welche als Gegenrichtung zu der ersten Umlaufrichtung ausgebildet ist. Die Stegseiten begrenzen die Stege in Umlaufrichtung.

Alternativ oder ergänzend sind die Rohtaschen an der Position in Umlaufrichtung, an der nach den weiteren Verfahrensschritten die Taschen zur Aufnahme der Wälzkörper angeordnet sind. Insbesondere sind die Rohstege jeweils in Umlaufrichtung breiter ausgebildet als die Stege.

Weitere Merkmale, Vorteile und Wirkungen der Erfindung ergeben sich aus der nachfolgenden Beschreibung eines bevorzugten Ausführungsbeispiels der Erfindung sowie der beigefügten Figuren Dabei zeigen:
Figur 1 eine Übersichtsdarstellung des erfindungsgemäßen Verfahrens anhand von unterschiedlichen Fertigungsstufen eines Massivkäfigs:
Figur 2 a, b jeweils eine schematische axiale Draufsicht auf eine Fertigungseinrichtung zur Fertigung des Massivkäfigs zur Erläuterung der Zykloidbearbeitung;
Figur 3 eine schematische dreidimensionale Darstellung eines Massivkäfigs mit eingezeichneter Zykloidenbahn;
Figuren 4a, b eine schematische Detaildarstellung eines Vorzykloidenbearbeitungsschritts im Bereich einer Rohtasche;
Figur 4c einen ähnlichen Detailausschnitt wie in den Figuren 4a, b zur Erläuterung der geometrischen Kenngrößen der Bearbeitung;
Figuren 5a, b eine schematische Darstellung der Fertigung der ersten Stegseiten des Massivkäfigs:
Figur 5c eine schematische Darstellung eines Phasenversatzes einer ersten Zykloidenbahn;
Figuren 6a, b eine schematische Darstellung der Fertigung der zweiten Stegseiten;
Figur 6c eine schematische Darstellung eines Phasenversatzes der zweiten Zykloidenbahn;
Figur 7 eine schematische Schnittdarstellung einer Vollwelle als ein weiteres Ausführungsbeispiel der Erfindung;
Figur 8 die Vollwelle in der Figur 7 in radialer Draufsicht;
Figur 9 eine schematische Draufsicht auf einen Meißel für einen Zykloidenbahnbearbeitungsschritt;
Figur 10 eine schematische Draufsicht auf einen Vorbearbeitungsmeißel für einen Vorzykloidenbearbeitungsschritt.

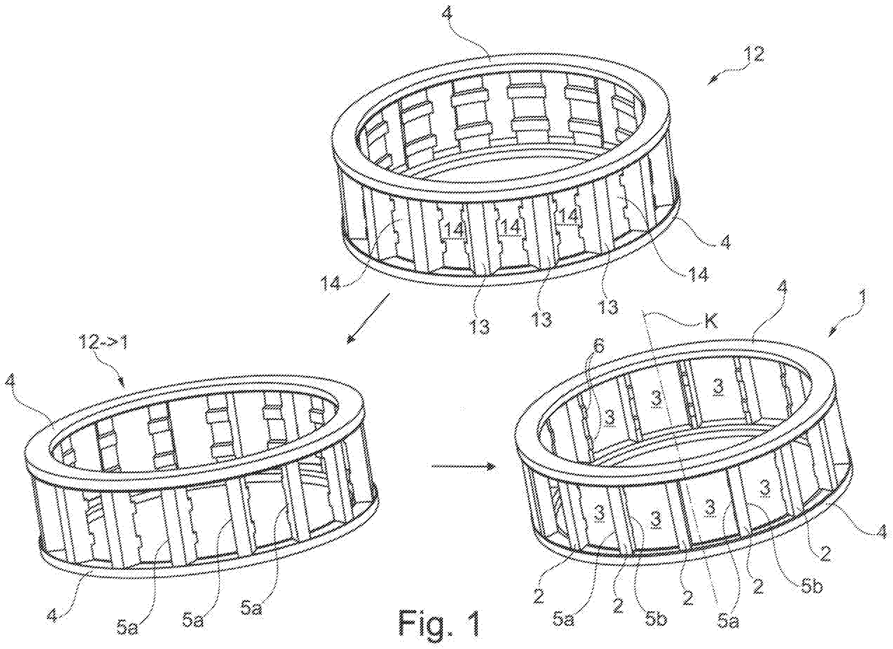

Die Figur 1 zeigt eine schematische Übersichtsdarstellung eines Verfahrens zum Fertigen eines Massivkäfigs 1 als ein Massivbauteil, wie dieser in der Figur 1 unten rechts dargestellt ist. Der Massivkäfig 1 ist zum Einbau in ein Wälzlager ausgebildet und weist eine Mehrzahl von Stegen 2 als Zwischenbereiche auf, welche in eine Umlaufrichtung um eine Käfigdrehachse K regelmäßig verteilt angeordnet sind. Zwischen den Stegen 2 ist jeweils eine Tasche 3 zur Aufnahme eines Wälzkörpers, in diesem Beispiel einer Rolle, angeordnet. Axialendseitig sind Seitenringe 4 angeordnet, wobei sich die Stege 2 und/oder die Taschen 3 zwischen den Seitenringen 4 erstrecken. Der Massivkäfig 1 ist einstöckig ausgebildet.

Jeder der Stege 2 weist eine erste Stegseite 5a als erste Taschenseite und eine zweite Stegseite 5b als eine zweite Taschenseite auf. In dem in der Figur 1 gezeigten Ausführungsbeispiel sind die ersten Stegseiten in Uhrzeigerrichtung und die zweiten Stegseiten in einer Gegenuhrzeigerrichtung orientiert. Aus Gründen der Übersichtlichkeit sind die Bezugszeichen nur an zwei Stegen 2 beispielhaft gezeigt. Insbesondere sind alle ersten Stegseiten 5a in die gleiche Richtung und alle zweiten Stegseiten 5b in die gleiche Gegenrichtung orientiert. Im Betrieb des nicht dargestellten Wälzlagers dienen die ersten und zweiten Stegseiten 5a, b als Anlaufflächen für die Wälzkörper, insbesondere für die Rollen. Die ersten und zweiten Stegseiten 5a, b sind insbesondere in einer Umlaufrichtung orientiert. Wie sich ebenfalls aus der Darstellung des Massivkäfigs 1 entnehmen lässt, weist dieser Schnappnasen 6 auf, welche radial innenseitig an die Stege 2 einstückig angeformt sind und welche bei einer Montage des Wälzlagers dazu dienen, dass Rollen in die Taschen 3 eingeschnappt werden können und dort verliersicher gehalten werden.

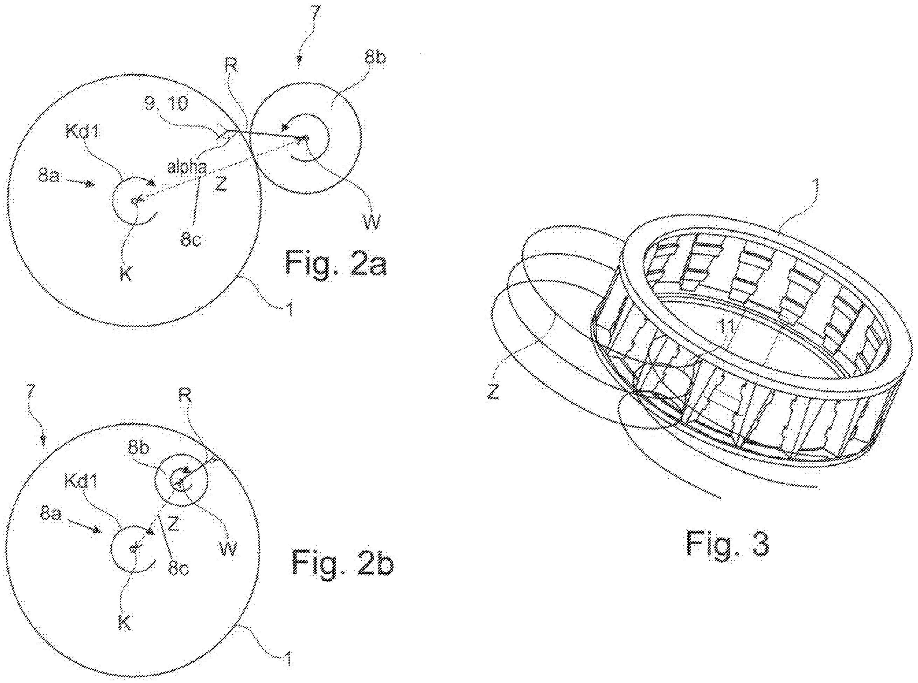

Das Verfahren zum Fertigen des Massivkäfigs erfolgt unter Nutzung einer sogenannten Zykloidbearbeitung, wobei eine Werkzeugschneide in Zykloidenbahnen relativ zu dem Werkstück in diesem Fall zu dem Massivkäfig 1 geführt wird. Zur Erläuterung der Zykloidbearbeitung wird auf die Figuren 2 und 3 verwiesen.

In der Figur 2a ist eine Fertigungseinrichtung 7 in einer axialen Draufsicht stark schematisiert dargestellt. Die Fertigungseinrichtung 7 ist ausgebildet, den Massivkäfig 1 um die Käfigdrehachse K mittels einer Bauteildreheinrichtung 8a in einer ersten Käfigdrehrichtung KD1 zu rotieren. Ferner weist die Fertigungseinrichtung 7 eine Werkzeugdreheinrichtung 8b, zum Beispiel einen Spindelantrieb, auf, wobei die Werkzeugdreheinrichtung 8b eine Werkzeugdrehachse W definiert. Die Käfigdrehachse K und die Werkzeugdrehachse W sind parallel zueinander, jedoch um einen Zustellabstand Z zueinander versetzt angeordnet. Eine Zustelleinrichtung 8c ermöglicht es, den Zustellabstand zu ändern.

Die Werkzeugdreheinrichtung 8b rotiert eine Werkzeugschneide 9 eines Meißels 10 in einer Werkzeugdrehrichtung WD1, wobei die Werkzeugschneide 9 um einen Radialvektor R von der Werkzeugdrehachse W beabstandet ist und gegenüber des Radialvektors R um einen Anstellwinkel α angestellt ist. Durch eine zeitgleiche Rotation des Massivkäfigs 1 um die Käfigdrehachse K und der Werkzeugschneide 9 um die Werkzeugdrehachse W beschreibt die Werkzeugschneide 9 eine Zykloidenbahn relativ zu dem Massivkäfig 1, wie dieser mit dem Bezugszeichen Z in der Figur 3 dargestellt ist. Die Zykloidenbahn Z ist durch eine entsprechende Rotation von Massivkäfig 1 und Werkzeugschneide 9 so ausgebildet, dass Schleifen 11 der Zykloidenbahn Z in den Taschen 3 angeordnet sind. Durch die Führung der Werkzeugschneide 9 entlang der Zykloidenbahn Z können somit die Taschen 3 in dem Massivkäfig 1 gefertigt werden.

In der Figur 2a ist eine Ausführungsform der Fertigungseinrichtung 7 gezeigt, bei der die Werkzeugdrehachse W außerhalb des Massivbauteils, in diesem Ausführungsbeispiel des Massivkäfigs 1 angeordnet ist und damit die Werkzeugschneide 9 radial von außen zu dem Massivbauteil zugestellt wird. In der Figur 2b ist dagegen eine Ausführungsform der Fertigungseinrichtung 7 gezeigt, bei der die Werkzeugdrehachse W innerhalb des Massivbauteils angeordnet ist, so dass die Werkzeugschneide 9 von radial innen zu dem Massivbauteil zugestellt wird.

Die Taschen 3 werden jedoch nicht in einem einzigen Fertigungsschritt mittels der Zykloidbearbeitung eingebracht, vielmehr erfolgt das Einbringen über drei Einzelschritte, wie dies nachfolgend im Zusammenhang mit der Figur 1 weiter erläutert wird.

In der Figur 1, oben Mitte, ist ein Käfigrohling 12 gezeigt, welcher bereits Rohstege 13 an den Positionen der späteren Stege 2 sowie Rohtaschen 14 aufweist. Die Rohtaschen 13 können prinzipiell beliebig eingebracht werden, es ist jedoch fertigungstechnisch besonders einfach, wenn diese über einen Vorzykloidenbearbeitungsschritt als Rohbearbeitungsschritt eingebracht werden.

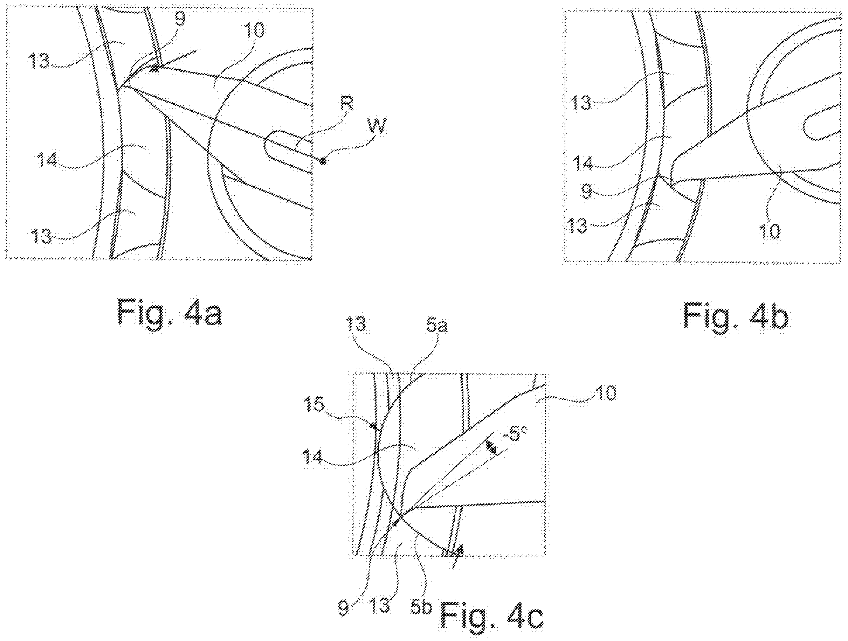

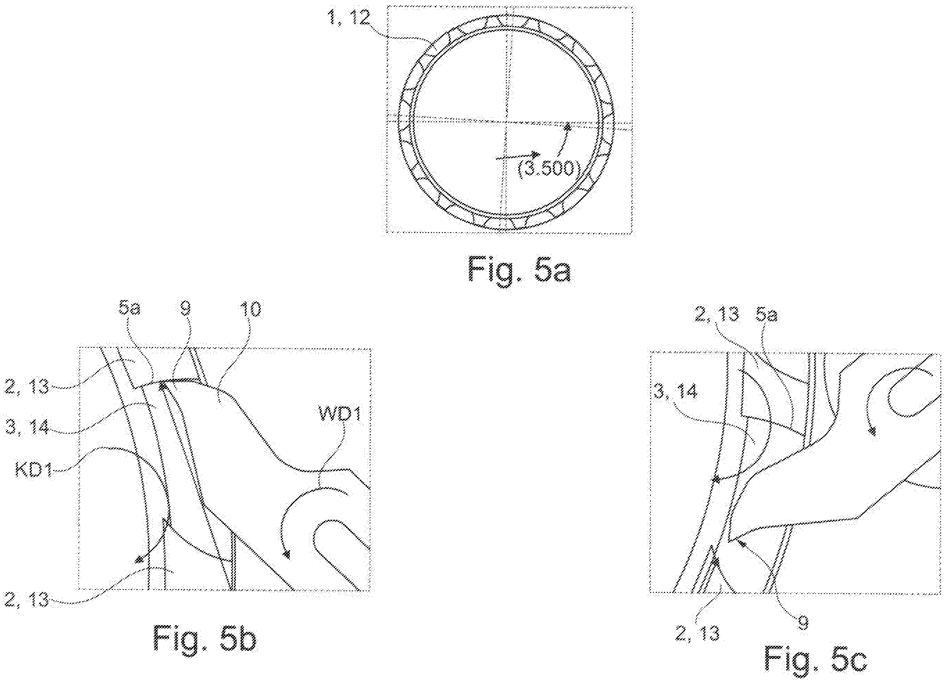

Der Vorzykloidenbearbeitungsschritt wird anhand der Figuren 4a, b, c erläutert. Die Figuren 4a, b, c zeigen jeweils einen Detailausschnitt des Käfigrohlings 12, wobei die Rohstege 13 und die Rohtaschen 14 bereits zu erkennen sind. Die Werkzeugschneide 9 wird entlang einer Vorzykloidenbahn (Figur 4c) 15 geführt. Entlang dieser Bahn werden die Seiten der Rohstege 13, die den späteren ersten Stegseiten 5a entsprechen, mittels eines Schneidvorgangs gefertigt. Dagegen werden - wie sich dies aus der Figur 4b ergibt - die Seiten der Rohstege 13, welche später den zweiten Stegseiten 5b entsprechen, schabend gefertigt. Anders ausgedrückt ist der Spanwinkel der Werkzeugschneide 9 in der Figur 4a positiv und kann in der Figur 5b negativ werden. In der Figur 4c ist der Spanwinkel in dem Vorzykloidenbearbeitungsschritt an der zweiten Stegseite 5b der Figur 4b mit -5 Grad eingezeichnet.

Durch den Vorzykloidenbearbeitungsschritt werden somit Durchbrüche in Form der Rohtaschen 14 in den Käfigrohling 12 eingebracht. Allerdings ist die Oberflächengüte, insbesondere der Stegseite, welche später der zweiten Stegseite 5b entspricht und die schabend und/oder mit einem negativen Spanwinkel bearbeitet wurde, nicht ausreichend genau für die Anforderung des Massivkäfigs 1. Aus diesem Grund erfolgt die Endbearbeitung der ersten und der zweiten Stegseite 5a, b über einen ersten und einen zweiten Zykloidenbearbeitungsschritt.

Das Ergebnis des ersten Zykloidenbearbedungsschritts ist in der Figur 1 unten links dargestellt, wobei in dem ersten Zykloidenbearbeitungsschritt die ersten Stegseiten 5a endbearbeitet werden. Im Rahmen des ersten Zykloidenbearbeitungsschritts wird die Werkzeugschneide 9 des Meißels 10 oder eine weitere Werkzeugschneide 9 eines weiteren Meißels 10 entlang einer ersten Zykloidenbahn geführt. Allerdings ist die erste Zykloidenbahn in Umlaufrichtung um die Käfigdrehachse K versetzt zur Vorzykloidenbahn des Vorzykloidenbearbeitungsschritts angeordnet.

Die Figuren 5a, b, c zeigen den ersten Zykloidenbearbeitungsschritt. Aus der Figur 5a ist zu entnehmen, dass für den ersten Zykloidenbearbeitungsschritt der Massivkäfig 1 beziehungsweise in dem Zustand der Käfigrohling 12 um einen Winkel in diesem Beispiel von 3,5 Grad um die Käfigdrehachse K verdreht wird. Dies resultiert in einem Phasenversatz der ersten Zykloidenbahn gegenüber der VorZykloidenbahn um einen Betrag von den genannten 3,5 Grad. Insbesondere sind die Minima und/oder die Maxima der ersten Zykloidenbahn und der VorZykloidenbahn um den Phasenversatz um die Käfigdrehachse K zueinander versetzt.

In der Figur 5b ist das Eintauchen der Werkzeugschneide 9 gezeigt, wobei zu erkennen ist, dass die Werkzeugschneide 9 entlang der ersten Zykloidenbahn so geführt wird, dass die Werkzeugschneide 9 die ersten Stegseiten 5a schneidet und/oder mit einem positiven Spanwinkel bearbeitet. Die Figur 5c zeigt den Austritt der Werkzeugschneide 9 aus der Tasche 3, wobei zu erkennen ist. dass diese beabstandet und/oder kontaktlos zu der Seite der Rohstege 13 geführt wird, welche später die zweite Stegseite 5b bilden. Somit werden in dem ersten Zykloidenbearbeitungsschritt ausschließlich die ersten Stegseiten 5a gefertigt. Die Käfigdrehrichtung KD1 des Massivkäfigs beziehungsweise Käfigrohlings 12 und die Werkzeugdrehrichtung WD1 der Werkzeugschneide 9 um die Werkzeugdrehachse W sind zueinander gegensinnig.

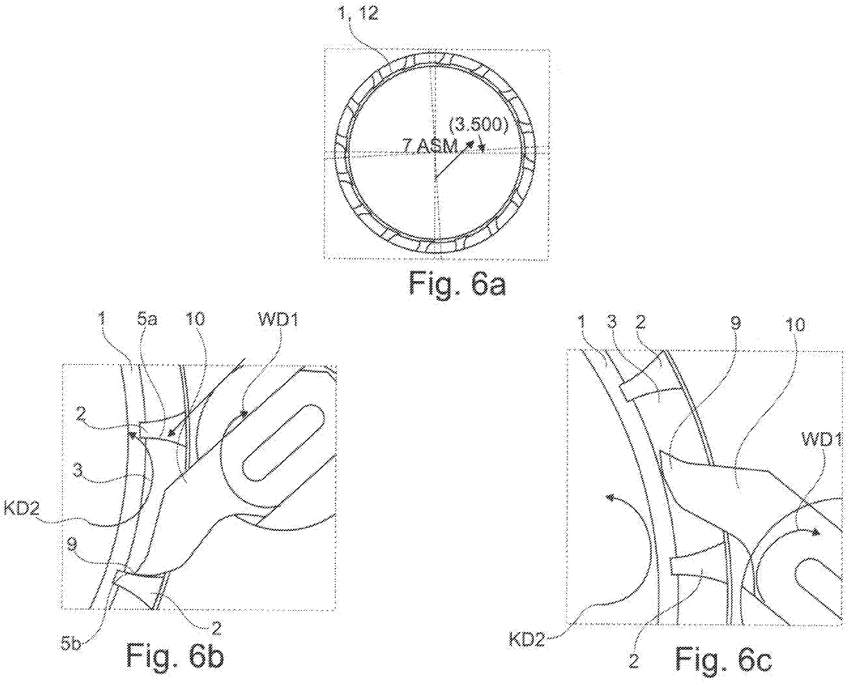

Nachdem der erste Zykloidenbearbeitungsschritt durchgeführt wurde und insbesondere die ersten Stegseiten 5a endbearbeitet wurden, erfolgt ein zweiter Zykloidenbearbeitungsschritt. Bei diesem zweiten Zykloidenbearbeitungsschritt, wie dieser in den Figuren 6a, b, c dargestellt ist, wird der Anstellwinkel alpha der Werkzeugschneide 9 verändert. Insbesondere wird der Meißel 10 um 180 Grad umgedreht Zudem wird die zweite Zykloidenbahn ebenfalls phasenversetzt zur Vorzykloidenbahn, in diesem Fall jedoch um 3,5° in Gegenrichtung.

Ferner werden die Drehrichtungen des Massivkäfigs 1 beziehungsweise des Käfigrohlings 12 und der Werkzeugschneide 9 um die Werkzeugdrehachse W umgedreht, so dass der Massivkäfig 1 bzw. der Käfigrohling 12 um eine Käfiggegendrehrichtung KD2 und die Werkzeugschneide in einer Werkzeuggegendrehrichtung WD2 rotiert werden. Im Ergebnis wird die Werkzeugschneide 9 so geführt, dass in dem zweiten Zykloidenbearbeitungsschritt die zweiten Stegseiten 5b geschnitten werden und/oder der Spanwinkel der Werkzeugschneide 9 positiv ist. Beim Austritt ist die Werkzeugschneide 9 wieder kontaktfrei zu den ersten Stegseiten 5a. Die erste und die zweite Zykloidenbahn sind in der Form gleich, jedoch gegenläufig und insgesamt um den doppelten Phasenversatz, also in diesem Beispiel um 7° zueinander versetzt,

Somit werden sowohl die ersten Stegseiten 5a als auch die zweiten Stegseiten 5b geschnitten beziehungsweise mit einem positiven Spanwinkel der Werkzeugschneide 9 bearbeitet, sodass diese eine hohe Oberflächengüte aufweisen beziehungsweise als eine Endbearbeitung dargestellt werden können.

Nebenbei bemerkt, werden durch den ersten und den zweiten Zykloidenbearbeitungsschritt auch die Schnappnasen 6 gefertigt.

Prinzipiell ist es möglich, einen Massivkäfig 1 mit Taschen 3 zu bilden, wobei die Taschen 3 in einer radialen Draufsicht von außen rechteckförmig ausgebildet sind. Dies ist in der Figur 1 dargestellt. Es ist jedoch auch möglich, während der Bearbeitung den Zustellabstand Z in Abhängigkeit einer axialen Position der Werkzeugschneide 9 zu ändern, sodass trapezförmige Taschen 3 gebildet werden, wie diese in der Figur 3 dargestellt sind Der Übergang von rechteckförmigen Taschen 3 zu trapezförmigen Taschen 3 kann durch eine Anpassung der Programmierung der Fertigungseinrichtung 6 umgesetzt werden.

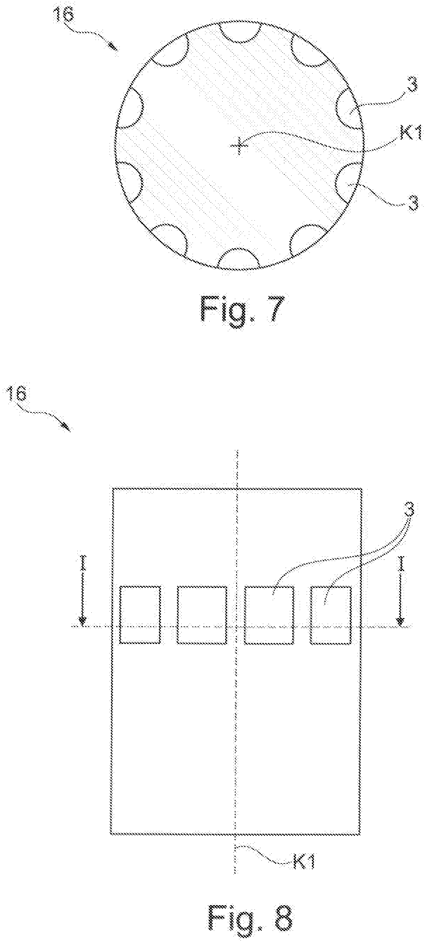

In der Figur 7 und 8 ist als ein weiteres Ausführungsbeispiel der Erfindung ein Massivbauteil ausgebildet als eine Vollwelle 16 in einer Schnittdarstellung bzw. in einer radialen Draufsicht gezeigt. Die Vollwelle 16 weist eine Mehrzahl von Taschen 3 auf, die in diesem Ausführungsbeispiel als Sacktaschen und nicht wie in den vorhergehenden Figuren als Durchgangstaschen ausgebildet sind. Die Taschen 3 können wie zuvor bei dem Massivkäfig 1 beschrieben über die Verfahrensfolge des Vorzykloidenbearbeitungsschritts und den Zykloidenbearbeitungsschritten eingebracht werden.

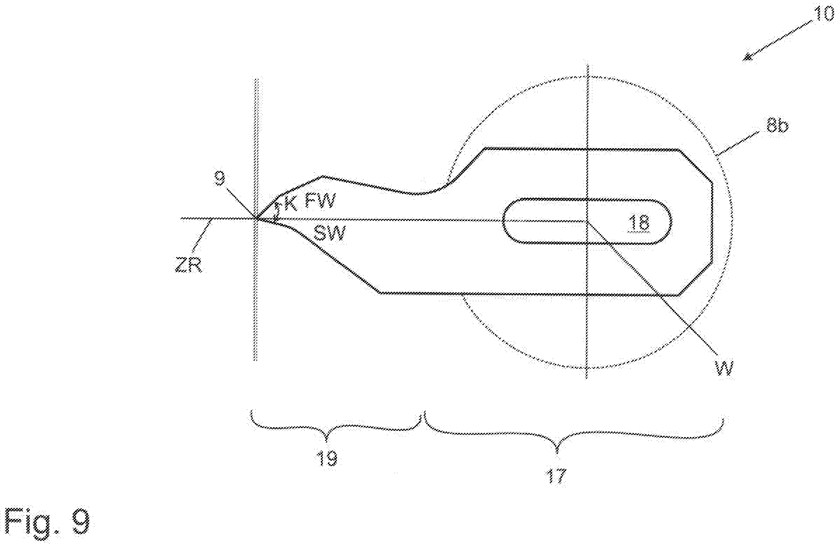

Die Figur 9 zeigt den Meißel 10, wie dieser in dem Zykloidenbearbeitungsschritt eingesetzt wird in einer axialen Draufsicht von oben. Der Meißel 10 ist auf der Werkzeugdreheinrichtung 8b angeordnet und wird um die Werkzeugdrehachse W rotiert Der Meißel 10 weist einen Aufnahmeabschnitt 17 auf, in dem ein Langloch 18 als Schnittstelle zu der Werkzeugdreheinrichtung 8b eingebracht ist Der Aufnahmeabschnitt 17 hat in der Draufsicht einen eine rechteckige Grundkontur.

An den Aufnahmeabschnitt 17 schließt sich ein Meißelabschnitt 19 an dessen freien, dem Aufnahmeabschnitt 17 abgewandten Ende die Werkzeugschneide 9 angeordnet ist. Die Werkzeugschneide 9 verläuft parallel zu der Werkzeugdrehachse W. Die Werkzeugschneide 8 bzw. der Meißel 10 weist einen Keilwinkel K auf, welcher in diesem Ausführungsbeispiel 58° beträgt.

In der Figur 9 ist ein Radialvektor ZR eingezeichnet, welcher von der Werkzeugdrehachse W durch die Werkzeugschneide 9 verläuft und als Radialvektor senkrecht auf der Werkzeugdrehachse W steht. Der Radialvektor ZR geht durch den Winkelbereich, der durch den Keilwinkel K definiert ist und teilt diesen in einen Freiwinkelabschnitt FW und in einen Spanwinkelabschnitt SW. Der Freiwinkelabschnitt FW erstreckt sich von dem Radialvektor ZR bis zur Begrenzung des Keilwinkels K. Der Spanwinkelabschnitt SW erstreckt sich in Gegenrichtung von dem Radialvektor ZR bis zu der anderen Begrenzung des Keilwinkels K. Der Freiwinkelabschnitt FW ist deutlich größer als der Spanwinkelabschnitt SW ausgebildet und beträgt in diesem Ausführungsbeispiel 48°. Der Spanwinkelabschnitt SW beträgt dagegen nur 13°. Durch diese Schneidengeometrie kann der Zykloidenbearbeitungsschritt in der benötigen Genauigkeit durchgeführt werden. Um eine ausreichende Stabilität des Meissels 10 zu erreichen, ist dieser in einer gekröpften Form ausgebildet

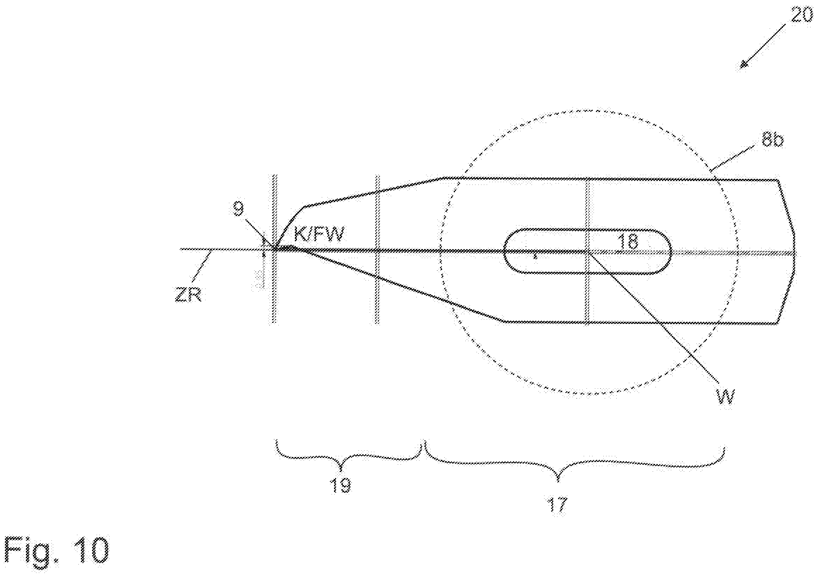

In der Figur 10 ist ein Vorbearbeitungsmeißel 20 gezeigt, welcher wie der Meißel 10 in der Figur 9 in einen Aufnahmeabschnitt 17 und einen Meißelabschnitt 19 unterteilt werden kann. Ebenfalls ist ein Radialvektor ZR definiert, der sich von der Werkzeugdrehachse W durch die werkzeugschneide 9 erstreckt. Der Keilwinkel K beträgt allerdings bei dem Vorbearbeitungsmeißel 20 50°. Ferner erstreckt sich der Bereich des Keilwinkels K ausschließlich in dem Freiwinkelbereich FW, wobei der Freiwinkelbereich FW gegen die Drehrichtung des Vorbearbeitungsmeißels 20 vor dem Radialvektor ZR angeordnet ist. Insbesondere ergibt sich in der gezeigten Draufsicht ein ausgesparter Bereich, der durch die Begrenzung des Keilwinkels K und/oder des Freiwinkelbereichs FW einerseits und dem Radialvektor ZR andererseits definiert ist.

### Bezugszeichenliste

- 1: Massivkäfig
- 2: Stege
- 3: Taschen
- 4: Seitenringe
- 5a: erste Steigseiten
- 5b: zweite Stegseiten
- 6: Schnappnasen
- 7: Fertigungseinrichtung
- 8a: Bauteildreheinrichtung
- 8b: Werkzeugdreheinrichtung
- 8c: Zustelleinrichtung
- 9: Werkzeugschneide
- 10: Meißel
- 11: Schleifen
- 12: Käfigrohling
- 13: Rohstege
- 14: Rohtaschen
- 15: Vorzykloidenbahn
- 16: Vollwelle
- 17: Aufnahmeabschnitt
- 18: Langloch
- 19: Meißelabschnitt
- 20: Vorbearbeitungsmeißel
- α: Anstellwinkel
- K1: Käfigdrehachse
- R: Radialvektor
- KD1: Käfigdrehrichtung
- KD2: Käfiggegendrehrichtung
- W: Werkzeugdrehachse
- WD1: Werkzeugdrehrichtung
- WD2: Werkzeuggegendrehrichtung
- Z: Zustellabstand
- ZR: Radialvektor beim Meißel 10 und beim Vorbearbeitungsmeißel 20
- K: Keilwinkel
- FW: Freiwinkelabschnitt
- SW: Spanwinkelabschnitt

## Patentansprüche

1. Fertigungseinrichtung (7) zur Fertigung eines Massivbauteils aus einem Bauteilrohling durch mindestens einen Zykloidenbearbeitungsschritt, wobei der Bauteilrohling als ein Zwischenprodukt ausgebildet ist und eine Mehrzahl von Rohtaschen (14) aufweist,
mit einer Bauteildreheinrichtung (8a) zur Rotation des Massivbauteils um eine Bauteildrehachse,
mit einem Meißel (10), wobei der Meißel (19) eine Werkzeugschneide (9) aufweist, wobei die Werkzeugschneide (8) einen Keilwinkel (K) aufweist,
mit einer Werkzeugdreheinrichtung (8b) zur Rotation des Meißels (10) um eine Werkzeugdrehachse (W), wobei die Werkzeugdrehachse (W) versetzt zu der Bauteildrehachse angeordnet ist, mit einer Zustelleinrichtung (8c) zur Änderung eines Zustellabstands (Z) zwischen der Bauteildrehachse und der Werkzeugdrehachse (W),
mit einer Steuereinrichtung zur Steuerung der Bauteildreheinrichtung (8a), der Werkzeugdreheinrichtung (8b) und der Zustelleinrichtung (8c), so dass die Werkzeugschneide (9) des Meißels (10) relativ zu dem, um die Bauteildrehachse in einer Bauteildrehrichtung rotierenden Bauteilrohling entlang einer Zykloidenbahn zur Bearbeitung der Rohtaschen (14) geführt wird,
**dadurch gekennzeichnet, dass**
ein Radialvektor (ZR) zu der Werkzeugdrehachse (W), welcher durch die Schneidkante der Werkzeugschneide (9) des Meißels (10) verläuft, die Werkzeugschneide (9) in einen Freiwinkelabschnitt (FW) und in einen Spanwinkelabschnitt teilt (SW), wobei der Radialvektor (ZR) durch den Winkelbereich, der durch den Keilwinkel (K) definiert ist, geht und diesen in den Freiwinkelabschnitt (FW) und in den Spanwinkelabschnitt (SW) teilt, wobei sich der Freiwinkelabschnitt (FW) von dem Radialvektor (ZR) bis zur Begrenzung des Keilwinkels (K) erstreckt und wobei sich der Spanwinkelabschnitt (SW) in Gegenrichtung von dem Radialvektor (ZR) bis zu der anderen Begrenzung des Keilwinkels (K) erstreckt, wobei der Freiwinkelabschnitt (FW) mindestens doppelt so groß wie der Spanwinkelabschnitt (SW) ausgebildet ist.

2. Fertigungseinrichtung (7) nach Anspruch 1, **dadurch gekennzeichnet, dass** die Werkzeugschneide (9) einen Keilwinkel (K) zwischen 53° und 63°, vorzugsweise 58° aufweist.

3. Fertigungseinrichtung (7) nach Anspruch 1 oder 2, **dadurch gekennzeichnet, dass** der Freiwinkelabschnitt (FW) größer als 45° ausgebildet ist.

4. Fertigungseinrichtung (7) nach einem der vorhergehenden Ansprüche, **gekennzeichnet durch** einen weiteren Meißel (10), wobei der Meißel (10) und der weitere Meißel (10) auf der Werkzeugdreheinrichtung (8b) gegensinnig zueinander angeordnet sind.

5. Fertigungseinrichtung (7) nach einem der vorhergehenden Ansprüche, **dadurch gekennzeichnet** durch einen Vorbearbeitungsmeißel (20), wobei ein weiterer Radialvektor (ZR) zu der Werkzeugdrehachse (W), welcher durch die Schneidkante der Werkzeugschneide (9) des Vorbearbeitungsmeißels (20) verläuft, außerhalb eines Keilwinkelbereichs der Werkzeugschneide (10) des Vorbearbeitungsmeißels (20) verläuft.

6. Fertigungseinrichtung (7) nach Anspruch 5, **dadurch gekennzeichnet, dass** ein Keilwinkel (K) der Werkzeugschneide (9) des Vorbearbeitungsmeißels (20) einen Wert zwischen 45° und 55° einnimmt und besonders bevorzugt 50° beträgt.

7. Verfahren zum Fertigen eines Massivbauteils, insbesondere eines Massivkäfigs (1) für ein Wälzlager mit der Fertigungseinrichtung (7) nach einem der vorhergehenden Ansprüche 4 bis 6,
wobei das Massivbauteil eine Bauteildrehachse definiert und eine Mehrzahl von Taschen (3) aufweist, wobei die Taschen (3) jeweils eine erste und eine zweite Taschenseite (5a,b) aufweisen, umfassend die Schritte:
Ausbilden eines Bauteilrohlings (12) in einem Rohbearbeitungsschritt mittels eines Rohbearbeitungswerkzeugs, wobei der Bauteilrohling (12) eine Mehrzahl von Rohtaschen (14) bildet;
Ausbilden der ersten Taschenseiten (5a) in Endkontur mittels der Werkzeugschneide des Meißels (10), wobei die Werkzeugschneide (9) des Meißels (10) in einem ersten Zykloidenbearbeitungsschritt relativ zu dem, um die Bauteildrehachse (K1) in einer Bauteildrehrichtung (KD1) rotierenden Bauteilrohling (12) entlang einer ersten Zykloidenbahn zur Bearbeitung der Rohtaschen (14) geführt wird, wobei die ersten Taschenseiten (5a) mittels der Werkzeugschneide (9) des Meißels geschnitten werden und/oder wobei ein Spanwinkel der Werkzeugschneide (9) im Bereich von - 15° bis 0° liegt oder positiv ist;
Umkehren der Bauteildrehrichtung (KD1) des Bauteilrohlings (12) und rotieren des Bauteilrohlings (12) in eine Bauteilgegendrehrichtung (KD2);
Ausbilden der zweiten Taschenseiten (5b) in Endkontur mittels einer weiteren Werkzeugschneide (9) des weiteren Meißels (10), wobei die weitere Werkzeugschneide (9) in einem zweiten Zykloidenbearbeitungsschritt relativ zu dem um die Bauteildrehachse (K1) in der Bauteilgegendrehrichtung (KD2) rotierenden Bauteilrohling (12) entlang einer zweiten Zykloidenbahn zur Bearbeitung der Rohtaschen (14) geführt wird, wobei die zweiten Taschenseiten (5b) mittels der weiteren Werkzeugschneide (9) des weiteren Meißels geschnitten werden, und/oder wobei ein Spanwinkel der weiteren Werkzeugschneide (9) im Bereich von - 15° bis 0° liegt oder positiv ist.

8. Verfahren nach Anspruch 7, **dadurch gekennzeichnet, dass** die Rohtaschen (14) in den Bauteilrohling (12) durch einen Vorzykloidenbearbeitungsschritt eingebracht werden, wobei das Rohbearbeitungswerkzeug relativ zu dem, um die Bauteildrehachse (K1) in einer Bauteildrehrichtung (KD1) rotierenden Bauteilrohling (12) entlang mindestens einer weiteren Zykloidenbahn zur Bildung der Rohtaschen (14) geführt wird.

9. Verfahren nach einem der vorhergehenden Ansprüche 7 oder 8, **dadurch gekennzeichnet, dass** das Massivbauteil als Massivkäfig (1) für ein Wälzlager ausgebildet wird, wobei der Massivkäfig (1) eine Käfigdrehachse (K) definiert und eine Mehrzahl von Stegen (2) aufweist, welche die Taschen (3) zur Aufnahme von Wälzkörpern bilden, wobei die Taschen (3) jeweils die erste und zweite Taschenseite (5a,b) zur Anlage der Wälzkörper in Umlaufrichtung um die Käfigdrehachse (K) aufweisen.

## Claims

1. A manufacturing device (7) for manufacturing a solid component out of a component blank by at least one cycloid machining step, wherein the component blank is designed as an intermediate product and has a plurality of rough pockets (14),
having a component rotating device (8a) for rotating the solid component about a component rotation axis,
having a chisel (10), wherein the chisel (19) has a tool cutting lip (9), wherein the tool cutting lip (8) has a wedge angle (K),
having a tool rotating device (8b) for rotating the chisel (10) about a tool rotation axis (W), wherein the tool rotation axis (W) is arranged offset to the component rotation axis,
having an infeed device (8c) for varying an infeed distance (Z) between the component rotation axis and the tool rotation axis (W),
having a control device for controlling the component rotating device (8a), the tool rotating device (8b) and the infeed device (8c) such that the tool cutting lip (9) of the chisel (10) is guided along a cycloidal path relative to the component blank rotating about the component rotation axis in a component rotation direction for machining the rough pockets (14),
**characterised in that**
a radial vector (ZR) to the tool rotation axis (W) which extends through the cutting edge of the tool cutting lip (9) of the chisel (10) divides the tool cutting lip (9) into a clearance angle section (FW) and a rake angle section (SW), wherein the radial vector (ZR) passes through the angular range, which is defined by the wedge angle (K), and divides said angular range into the clearance angle section (FW) and into the rake angle section (SW), wherein the clearance angle section (FW) extends from the radial vector (ZR) to the boundary of the wedge angle (K), and wherein the rake angle section (SW) extends in the opposite direction from the radial vector (ZR) to the other boundary of the wedge angle (K), wherein the clearance angle section (FW) is designed at least twice as large as the rake section (SW).

2. The manufacturing device (7) according to claim 1, **characterised in that** the tool cutting lip (9) has a wedge angle (K) between 53° and 63°, preferably 58°.

3. The manufacturing device (7) according to claim 1 or 2, **characterised in that** the clearance angle section (FW) is designed greater than 45°.

4. The manufacturing device (7) according to any one of the preceding claims, **characterised by** a further chisel (10), wherein the chisel (10) and the further chisel (10) are arranged on the tool rotating device (8b) in opposite directions to each other.

5. The manufacturing device (7) according to any one of the preceding claims, **characterised by** a pre-machining chisel (20), wherein a further radial vector (ZR) to the tool rotation axis (W) which extends through the cutting edge of the tool cutting lip (9) of the pre-machining chisel (20) extends outside a wedge angle range of the tool cutting edge (10) of the pre-machining chisel (20).

6. The manufacturing device (7) according to claim 5, **characterised in that** a wedge angle (K) of the tool cutting lip (9) of the pre-machining chisel (20) assumes a value between 45° and 55° and particularly preferably 50°.

7. A method for manufacturing a solid component, in particular a solid cage (1) for a roller bearing, having the manufacturing device (7) according to any one of the preceding claims 4 to 6,
wherein the solid component defines a component rotation axis and has a plurality of pockets (3), wherein the pockets (3) each have a first and a second pocket side (5a, b), comprising the steps:
configuring a component blank (12) in a roughing step by means of a roughing tool, wherein the component blank (12) forms a plurality of rough pockets (14);
forming the first pocket sides (5a) in the final contour by means of the tool cutting lip of the chisel (10), wherein the tool cutting lip (9) of the chisel (10) in a first cycloid machining step is guided relative to the component blank (12) rotating about the component rotation axis (K1) in a component rotation direction (KD1) along a first cycloidal path for machining the rough pockets (14), wherein the first pocket sides (5a) are cut by means of the tool cutting lip (9) of the chisel and/or wherein a rake angle of the tool cutting lip (9) is in the range of -15° to 0° or is positive;
reversing the component rotation direction (KD1) of the component blank (12) and rotating the component blank (12) in a component counter-rotation direction (KD2);
configuring the second pocket sides (5b) in the final contour by means of a further tool cutting lip (9) of the chisel (10), wherein the further tool cutting lip (9) in a second cycloid machining step is guided relative to the component blank (12) rotating about the component rotation axis (K1) in a component counter-rotation direction (KD2) along a first cycloidal path for machining the rough pockets (14), wherein the second pocket sides (5b) are cut by means of the further tool cutting lip (9) of the further chisel and/or wherein a rake angle of the further tool cutting lip (9) is in the range of -15° to 0° or is positive.

8. The method according to claim 7, **characterised in that** the rough pockets (14) are introduced into the component blank (12) by a pre-cycloid machining step, wherein the roughing tool is guided relative to the component blank (12) rotating about the component rotation axis (K1) in a component rotation direction (KD1) along at least one further cycloidal path to form the rough pockets (14).

9. The method according to one of the preceding claims 7 or 8, **characterised in that** the solid component is configured as a solid cage (1) for a roller bearing, wherein the solid cage (1) defines a cage rotation axis (K) and a plurality of webs (2), which form the pockets (3) for receiving rolling bodies, wherein the pockets (3) each have the first and the second pocket side (5a, b) for bearing the rolling elements in the circumferential direction about the cage rotation axis (K).

## Revendications

1. Dispositif de fabrication (7) pour la fabrication d'une pièce pleine à partir d'une ébauche de pièce par au moins une étape de traitement cycloïde, l'ébauche de pièce étant formée en tant que produit intermédiaire et comportant une pluralité de poches brutes (14),
avec un dispositif de rotation de pièce (8a) pour faire tourner la pièce pleine autour d'un axe de rotation de pièce,
avec un ciseau (10), le ciseau (19) ayant une lame d'outil (9), la lame d'outil (8) ayant un angle d'attaque (K),
avec un dispositif de rotation d'outil (8b) pour faire tourner le ciseau (10) autour d'un axe de rotation d'outil (W), l'axe de rotation d'outil (W) étant disposé de manière décalée par rapport à l'axe de rotation de la pièce,
avec un dispositif d'avance (8c) pour modifier une distance d'avance (Z) entre l'axe de rotation de pièce et l'axe de rotation d'outil (W),
avec un dispositif de commande pour commander le dispositif de rotation de pièce (8a), le dispositif de rotation d'outil (8b) et le dispositif d'avance (8c), de sorte que la lame d'outil (9) du ciseau (10) est guidée par rapport à l'ébauche de la pièce tournant autour de l'axe de rotation de la pièce dans une direction de rotation de la pièce le long d'une trajectoire cycloïde pour traiter les poches brutes (14),
**caractérisé en ce que**
un vecteur radial (ZR) à l'axe de rotation d'outil (W) qui traverse le tranchant de la lame d'outil (9) du ciseau (10) divise la lame d'outil (9) en une section d'angle de dégagement (FW) et une section d'angle de coupe (SW) ; le vecteur radial (ZR) passant dans la plage angulaire qui est définie par l'angle d'attaque (K), et divise celui-ci en la section d'angle de dégagement (FW) et en la section d'angle de coupe (SW), la section d'angle de dégagement (FW) s'étendant du vecteur radial (ZR) à la limite de l'angle d'attaque (K) et la section d'angle de coupe (SW) s'étendant dans la direction opposée au vecteur radial (ZR) à l'autre limite de l'angle d'attaque (K), la section d'angle de dégagement (FW) étant au moins deux fois plus grande que la section d'angle de coupe (SW).

2. Dispositif de fabrication (7) selon la revendication 1, **caractérisé en ce que** la lame d'outil (9) présente un angle d'attaque (K) compris entre 53° à 63°, de préférence de 58°.

3. Dispositif de fabrication (7) selon la revendication 1 ou 2, **caractérisé en ce que** la section d'angle de dégagement (FW) est supérieure à 45°.

4. Dispositif de fabrication (7) selon l'une quelconque des revendications précédentes, **caractérisé par** un autre ciseau (10), le ciseau (10) et le ciseau supplémentaire (10) étant disposés à l'opposé l'un de l'autre sur le dispositif de rotation d'outil (8b).

5. Dispositif de fabrication (7) selon l'une quelconque des revendications précédentes, **caractérisé par** un ciseau de traitement préalable (20), dans lequel un autre vecteur radial (ZR) à l'axe de rotation d'outil (W), qui passe par le tranchant de la lame d'outil (9) du ciseau de traitement préalable (20), passant à l'extérieur une plage d'angle d'attaque de la lame d'outil (10) du ciseau de traitement préalable (20).

6. Dispositif de fabrication (7) selon la revendication 5, **caractérisé en ce qu'**un angle d'attaque (K) de la lame d'outil (9) du ciseau de traitement préalable (20) prend une valeur comprise entre 45° à 55° et, de préférence, s'élève à 50°.

7. Procédé de fabrication d'une pièce pleine, en particulier d'une cage massive (1) pour roulement, avec le dispositif de fabrication (7) selon l'une quelconque des revendications précédentes 4 à 6,
la pièce pleine définissant un axe de rotation de pièce et comporte une pluralité de poches (3), les poches (3) ayant chacune un premier et un second côté de poche (5a, b), comprenant les étapes suivantes consistant à :
former une ébauche de pièce (12) lors d'une étape d'ébauche au moyen d'un outil d'ébauchage, l'ébauche de pièce (12) formant une pluralité de poches brutes (14) ;
former les premiers côtés de la poche (5a) dans le contour final au moyen de la lame d'outil du ciseau (10), la lame d'outil (9) du ciseau (10) étant guidée dans une première étape de traitement cycloïde par rapport à l'ébauche de pièce (12) tournant autour de l'axe de rotation de pièce (K1) dans une direction de rotation de pièce (KD1) le long d'une première trajectoire cycloïde pour traiter les poches brutes (14), les premiers côtés de la poche (5a) étant découpés au moyen de la lame d'outil (9) du ciseau et/ou un angle de coupe de la lame d'outil (9) se situant dans la plage allant de -15° à 0° ou est positif ;
inverser la direction de rotation de la pièce (KD1) de l'ébauche de pièce (12) et faire tourner l'ébauche de pièce (12) dans la direction contraire de la pièce (KD2) ;
former les seconds côtés de poche (5b) dans le contour final au moyen d'une autre lame d'outil (9) de l'autre ciseau (10), l'autre lame d'outil (9) étant guidée dans une seconde étape de traitement cycloïde par rapport à l'ébauche de pièce (12) tournant autour de l'axe de rotation de pièce (K1) dans la direction contraire de la pièce (KD2), le long d'une seconde trajectoire cycloïde pour traiter les poches brutes (14), les seconds côtés de poche (5b) étant découpés au moyen de l'autre lame d'outil (9) de l'autre ciseau et/ou un angle de coupe de l'autre lame d'outil (9) se situant dans la plage allant de -15° à 0° ou est positif.

8. Procédé selon la revendication 7, **caractérisé en ce que** les poches brutes (14) sont introduites dans l'ébauche de pièce (12) par une étape de traitement cycloïde préalable, dans lequel l'outil d'ébauchage est guidé par rapport à l'ébauche de pièce (12) tournant autour de l'axe de rotation de pièce (K1), dans une direction de rotation de pièce (KD1) le long d'au moins une autre trajectoire cycloïde pour former les poches brutes (14).

9. Procédé selon l'une quelconque des revendications 7 ou 8 précédentes, **caractérisé en ce que** la pièce pleine est conçue comme une cage massive (1) pour roulement, la cage massive (1) définissant un axe de rotation de cage (K) et présentant une pluralité de nervures (2), qui forment les poches (3) pour recevoir des éléments de roulement, les poches (3) ayant chacune des premier et second côtés de poche (5a, b) pour porter les éléments de roulement dans la direction circonférentielle autour de l'axe de rotation de cage (K).
